(19) Europäisches Patentamt
European Patent Office
Office européen des brevets

(11) **EP 2 281 185 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
***G01N 21/3581*** *(2014.01)*    ***G01N 21/63*** *(2006.01)*
*H01S 3/00* *(2006.01)*    *H01S 3/10* *(2006.01)*

(21) Anmeldenummer: **09757105.3**

(22) Anmeldetag: **14.05.2009**

(86) Internationale Anmeldenummer:
**PCT/DE2009/000662**

(87) Internationale Veröffentlichungsnummer:
**WO 2009/146671 (10.12.2009 Gazette 2009/50)**

(54) **THZ PUMP-PROBE SPEKTROSKOPIE MIT EINER ÜBER DIE REPETITIONSRATE EINSTELLBAREN VERZÖGERUNG**

THZ PUMP-PROBE SPECTROSCOPY WITH A DELAY WHICH CAN BE SET BY THE REPETITION RATE

SPECTROSCOPIE THZ POMPE-SONDE AVEC UNE TEMPORISATION AJUSTABLE PAR L INTERMÉDIAIRE DU TAUX DE RÉPÉTITION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **03.06.2008  DE 102008026484**

(43) Veröffentlichungstag der Anmeldung:
**09.02.2011  Patentblatt 2011/06**

(73) Patentinhaber: **Menlo Systems GmbH**
**82152 Martinsried (DE)**

(72) Erfinder:
• **HOCHREIN, Thomas, Eugen**
**97265 Hettstadt (DE)**
• **KOCH, Martin**
**35274 Kirchhain (DE)**
• **KRUMBHOLZ, Norman**
**38479 Tappenbeck (DE)**

(74) Vertreter: **Grünecker Patent- und Rechtsanwälte PartG mbB**
**Leopoldstraße 4**
**80802 München (DE)**

(56) Entgegenhaltungen:
**WO-A-2007/079342    US-A1- 2005 073 689**
**US-B1- 6 320 191**

• **BARTELS A ET AL: "Ultrafast time-domain spectroscopy based on high-speed asynchronous optical sampling" REVIEW OF SCIENTIFIC INSTRUMENTS, AIP, MELVILLE, NY, US, Bd. 78, Nr. 3, 22. März 2007 (2007-03-22), Seiten 35107-35107, XP012103859 ISSN: 0034-6748**

**Beschreibung**

Die vorliegende Erfindung betrifft ein Verfahren zur Erzeugung zweier verzögerter Pulse, bei welchem eine zeitliche Verzögerung ohne den Einsatz mechanischer Teile erreicht werden kann und wobei insbesondere die zeitliche Verzögerung variiert werden kann, gemäß dem Oberbegriff des Anspruchs 1.

Es ist bekannt, in einem Verfahren einen Femtosekundenlaser zu verwenden, um mit dessen optischen Pulsen eine photoleitende Dipolantenne anzuregen. Die Laserpulse erzeugen in der Dipolantenne freie Ladungsträger, die durch ein äußeres elektrisches Feld beschleunigt werden. Die beschleunigten Ladungsträger bilden in Form eines kurzen Strompulses die Quelle für einen in den Raum abgestrahlten elektromagnetischen Puls. Die auf diese Weise erzeugten elektromagnetischen Pulse können beispielsweise zur Materialuntersuchung herangezogen werden, wobei diese wiederum beispielsweise zur Überwachung bei Herstellungsprozessen von Kunststoffprodukten oder zur Werkstoffanalyse eingesetzt werden. Die Erzeugung zweier zeitlich verzögerter Pulse ist zudem Grundlage für weitere Anwendungsfelder wie Pump-Probe-Verfahren, optische Tomografie, interferometrische Messungen usw..

Diese Verfahren sind in der Form am weitesten verbreitet, dass ein gepulster Strahl unter Verwendung einer Strahlenquelle, insbesondere eines Lasers, erzeugt wird. Dieser Strahl wird in einen ersten Teilstrahl mit einem ersten Puls und in einen zweiten Teilstrahl mit einem zweiten Puls geteilt und anschließend werden die beiden Pulse in ein Ziel gelenkt. Dabei legt einer der beiden Pulse eine zu dem zweiten Puls verschiedene Strecke zurück. Diese Verzögerungsstrecke kann auf die verschiedensten Weisen realisiert werden, wie beispielsweise mit einem Spiegel, der einem zweiten Spiegel gegenüberliegt, wobei der Abstand der beiden Spiegel über eine präzise Mechanik oder eine Elektronik steuerbar ist. Ein eingekoppelter, gepulster Strahl kann in einem derartigen Aufbau eine einstellbare Strecke zurücklegen, die als Verzögerungsstrecke bezeichnet wird. Diese Strecke wird dazu genutzt, um die zeitliche Verzögerung zu einem vor dieser Verzögerungsstrecke ausgekoppelten Puls einzustellen. Dabei besteht ein Hauptproblem darin, die mechanische Anordnung der Verzögerungsstrecke dauerhaft einzustellen und es ist aus diesbezüglichen Aufbauten bekannt, dass diese häufig nachjustiert werden müssen.

Ferner ist aus dem Stand der Technik bekannt, eine Verzögerungsstrecke für optische Signale mit einem Auskoppelspiegel, der eine spiralförmig gekrümmte Spiegelfläche aufweist, auszuführen. Die DE 10 2005 011 045 A1 zeigt dazu eine Spiegelfläche mit einer Spiralkrümmung, wobei sich der Radius mit der Veränderung des Drehwinkels ändert. Wird ein derartiger Spiegel in eine entsprechende Anordnung eingebaut, kann die Verzögerungsstrecke durch Drehen des Spiegels verändert werden. Der Spiegelkörper weist dazu zwei Spiegelflächen auf, die symmetrisch zu einem Mittelpunkt angeordnet sind, wobei jede Teilfläche mit einem zunehmenden Radius beginnend von einem Minimalradius hin zu einem Maximalradius verläuft. Dabei ergeben sich ähnliche Probleme wie bei Bei den herkömmlichen Verfahren, insbesondere bei dem vorangehend aufgezeigten Verfahren zur Erzeugung zeitlich verzögerter Pulse, ist die zeitliche Verzögerung mit der Länge der Verzögerungsstrecke gekoppelt. Es ergibt sich dadurch eine Beschränkung der zeitlichen Verzögerung, dass die Länge der Verzögerungsstrecke mit der Größe des Aufbaus begrenzt ist. Aufgrund der verwendeten Mechaniken und der verwendeten Bauteilgeometrien ist zudem die Variabilität der Verzögerungsstrecken in Aufbauten dieser Art stark eingeschränkt. Bezüglich der verwendeten Verzögerungsstrecken ergeben sich auch Probleme hinsichtlich der Nachjustierung und der Ungenauigkeiten aufgrund von Vibrationen am Aufbau, da bei längeren zurückgelegten optischen Weglängen sich die seitlichen Abweichungen im Sinne der Strahlengesetze proportional dazu vergrößern.

Aus der US 2005/073 689 A1 ist ein Autokorrelationsverfahren für Laserpulse bekannt, bei dem ein gepulster Laserstrahl mittels eines Strahlteilers in zwei Teilstrahlen aufgeteilt wird. Der erste Teilstrahl wird direkt über eine Linse auf einen Fotodetektor geleitet, wohingegen der zweite Teilstrahl über ein Spiegelsystem und die Linse auf den Fotodetektor geleitet wird. Das Spiegelsystem realisiert eine Verzögerungsstrecke für den zweiten Teilstrahl. Durch Variation der Pulswiederholungsrate wird die zeitliche Verzögerung der Pulse des ersten und des zweiten Teilstrahls eingestellt.

Aus dem Fachartikel "Ultrafast time-domain spectroscopy based on highspeed asynchronous optical sampling" ist ein Terahertz-Spektroskopieverfahren bekannt, bei dem zwei modengekoppelte Laser mit einer festen Frequenzdifferenz betrieben werden.

Aus der WO 2007/079 342 A2 ist ein Terahertz-Spektroskopieverfahren bekannt, das für weit entfernte Objekte anwendbar ist. Ein gepulster Laserstrahl wird mittels eines Strahlteilers in zwei Teilstrahlen aufgeteilt, wobei einer der Teilstrahlen mittels einer optischen Verzögerungsvorrichtung verzögert wird.

US-B-6 320 191 offenbart Mittel zur Strahlablenkung beinhaltend eine Dispersionskompensation und einen Lichtleiter.

Der Erfindung liegt die Aufgabe zugrunde, ein Verfahren zur Erzeugung zweier verzögerter Pulse derart weiterzubilden, dass deren zeitliche Verzögerung einfach und in einem weiten Variationsbereich einstellbar ist.

Diese Aufgabe wird erfindungsgemäß durch ein Verfahren nach der Lehre des Patentanspruchs 1 gelöst.

Bevorzugte Ausführungsformen der Erfindung sind jeweils Gegenstand der Unteransprüche.

Im Grundsatz umfasst das Verfahren der Erfindung also die nachfolgend angegebenen Verfahrensschritte:

- Erzeugen eines gepulsten Strahls unter Verwendung einer Strahlenquelle, insbesondere eines gepulsten Lasers, der ein gepulstes Signal in Form von wiederholten Pulsen, beispielsweise mit einer Dauer im Bereich von Femtosekunden, erzeugt. Dabei kann aber auch ohne weiteres ein Laserpuls auf einer anderen Zeitskala und praktisch bei jeder Repetitionsfrequenz verwendet werden, wobei auch andere Strahlenarten, wie beispielsweise elektromagnetische Pulse, verwendet werden können, um das vorgeschlagene Verfahren beispielsweise zur Erzeugung von zeitlich verzögerten Pulsen in der Mikrowellentechnik anzuwenden.

- Teilen des gepulsten Strahls, wobei der erste Teilstrahl einen ersten Puls und der zweite Teilstrahl einen zweiten Puls enthält. Dazu kann ein Strahlteiler verwendet werden, der die verschiedenen Anteile mit gleichen oder verschiedenen Intensitäten durchlässt, wie z.B. ein teildurchlässiger Spiegel für einen Aufbau, bei dem der Laserstrahl frei angeordnet ist. Zudem ist vorgesehen, in einem Aufbau, in dem Lichtleiter, wie beispielsweise Glasfaserkabel, verwendet werden, als Strahlteiler einen Faserkoppler vorzusehen. Damit kann das Signal im Lichtleiter geführt und geteilt werden, ohne am Aufbau einer derartigen Anlage nachzujustieren. Prinzipiell können auch aus anderen Bereichen der Technik alle Elemente verwendet werden, die eine Teilung eines Signals in zwei Anteile ermöglichen.

- Lenken der beiden Pulse auf einen jeweiligen Zielbereich, wobei der erste Puls direkt in einen ersten Zielbereich gelangt und der zweite Puls nach dem Zurücklegen einer Verzögerungsstrecke in einen zweiten Zielbereich gelangt. Es ist dafür auch vorgesehen, dass die beiden Zielbereiche zusammenfallen können. Hierbei ist an im Wesentlichen feste Strecken, die der Signalstrahl zurücklegt, gedacht, wobei diese wenn nötig dem Verfahren angepasst werden können. Es ist vor allem für die Justierung einer Anlage deren Veränderbarkeit vorgesehen. Besonders hervorzuheben ist, dass die beiden Teilstrahlen verschiedene Weglängen zurücklegen müssen, um zu einer zeitlichen Verzögerung zu gelangen, wie in der nachfolgenden Weise beschrieben.

- Verwendung der beiden Pulse, wobei die beiden betrachteten Pulse dabei wahlweise aus dem gepulsten Signal entnommen werden und in einen jeweiligen Zielbereich gelenkt werden. Diese Pulse stehen abschließend für weitere Zwecke, wie beispielsweise für Anwendungen in der Terahertz-Technologie, zur Verfügung. Dabei gelangen diese auf Dipolantennen und erzeugen freie Ladungsträger, die in einem angelegten äußeren elektrischen Feld beschleunigt werden und einen Terahertz-Puls aussenden. Bei zusammenfallenden Zielbereichen ist beispielsweise an den Einsatz dieses Verfahrens für optische Messungen aus der Ultrakurzzeit-Physik zu denken, bei denen die Pulse dem gleichen Puls der gepulsten Quelle entstammen und in einem Zielbereich überlagert werden. Zur Vermessung der Pulse wird beispielsweise aus der Überlagerung des Pulses mit sich selbst durch Kreuzkorrelation auf die Pulsform geschlossen. Das Lenken der beiden Pulse kann hier frei von der geometrischen Ausgestaltung des Aufbaus, insbesondere als Freistrahl oder als geschlossenes fasergeführtes System, ausgeführt werden.

- Erfindungsgemäß kann die zeitliche Verzögerung der beiden Pulse im jeweiligen Zielbereich über die Pulswiederholungsrate des gepulsten Strahls eingestellt und variabel verändert werden. Bei im Wesentlichen festen optischen Weglängen, die der erste Puls und der zweite Puls zurücklegen, ergibt sich eine Änderung des Abstands der beiden Pulse im jeweiligen Zielbereich und insbesondere eine Variation der zeitlichen Verzögerung der beiden Pulse im jeweiligen Zielbereich durch eine Veränderung der Repetitionsrate. Auf diese Weise ist es zudem möglich, mit der Repetitionsrate den Abstand der beiden Pulse bzw. die zeitliche Verzögerung der beiden Pulse im jeweiligen Zielbereich einzustellen.

Im Ergebnis können zwei oder auch mehrere Pulse in einen jeweiligen Zielbereich gelenkt werden, wobei es aufgrund des vorgeschlagenen Verfahrens möglich ist, den zeitlichen Abstand zwischen dem Auftreffen der einzelnen Pulse im jeweiligen Zielbereich über die Repetitionsrate einzustellen. Es ergibt sich dahingehend keinerlei Einschränkung, dass die zeitliche Verzögerung beispielsweise durch eine endliche Verzögerungsstrecke begrenzt ist. Damit ist es nun insbesondere in der Terahertz-Technik möglich, zwei Terahertz-Pulse zu erzeugen, die einen sehr großen zeitlichen Abstand zueinander haben. Die Vermeidung der Einstellung von beweglichen Teilen während des Verfahrens erleichtert die Arbeit, indem es wesentlich seltener nötig ist, den Aufbau nachzujustieren, wobei sich auch aufgrund der Verringerung der Anzahl von beweglichen Teilen ein genauerer und mit weniger Fehlern behafteter Betrieb einer derartigen Vorrichtung ergibt. Die Verwendung von Glasfaserkabeln zur Führung des Laserstrahls bzw. des gepulsten Signals ermöglicht einen sehr stabilen Aufbau, wobei auch eine einfachere Montage für Produkte, die einen Aufbau zur Anwendung eines vorgeschlagenen Verfahrens betreffen, erzielt werden kann.

In einem bevorzugten Ausführungsbeispiel ist vorgesehen, dass der gepulste Strahl auf einen Strahlteiler, insbesondere auf einen Faserkoppler, trifft und in einen ersten Teilstrahl mit einem ersten Puls und in einen zweiten Teilstrahl mit einem zweiten Puls aufgeteilt wird. Der hier genannte Strahlteiler kann als halbdurchlässiger Spiegel für einen so genannten Freistrahlaufbau ausgebildet sein, wobei auch für die Erzeugung von mehreren Pulsen durch die Verwendung von mehreren teildurchlässigen Strahlteilern eine Möglichkeit besteht. In fasergekoppelten Systemen ist für den Strahlteiler beispielhaft ein Faserkoppler eine Möglichkeit, um den gepulsten Strahl in eine erste Faser, die einen ersten Teilstrahl mit einem ersten Puls enthält, und in eine zweite Faser, die einen zweiten Teilstrahl mit einem zweiten Puls enthält, zu trennen, wobei dies mit allen Arten von Lichtleitern durchgeführt werden kann.

In einer weiteren Ausgestaltung ist es vorgesehen, dass der erste und der zweite Puls aus demselben Puls des gepulsten Signals stammen, wobei nur beispielhaft an eine Vermessung des Pulses gedacht ist. Weiterhin kann vorgesehen sein, dass der erste Puls und der zweite Puls aus verschiedenen Pulsen des gepulsten Signals stammen, um bei der Erzeugung beispielsweise von elektromagnetischen Pulsen, die aus angeregten Dipolantennen stammen, eine zeitliche Verzögerung der erzeugten elektromagnetischen Pulse zu erreichen. Dabei kann abhängig von der benötigten zeitlichen Verzögerung ein entsprechender erster und zweiter Puls aus dem gepulsten Signal verwendet werden. Zur Verwendung der Pulse zur Pulsvermessung ist beispielhaft an Anwendungen im Bereich der Ultrakurzzeit-Physik gedacht, um Femto- bzw. Attosekundenpulse beispielsweise mittels Kreuzkorrelation zu überlagern und in einem langsamen Fotodetektor über das Signal zu integrieren, um Rückschlüsse auf deren Form zu ziehen und die Signalqualität zu prüfen.

Gemäß einer weiteren Ausführungsform der Erfindung wird der erste Puls über Mittel zur Strahlablenkung in einen Zielbereich gelenkt. Dies kann in einfacher Weise beispielsweise über einen Spiegel beispielsweise in einem Freistrahlaufbau erfolgen. Analog dazu kann in einem fasergekoppelten System ein Signal durch einen entsprechend geformten Lichtleiter abgelenkt werden. Um die Strahlablenkung zu justieren bzw. der Verwendung anzupassen, ist an weitere Mittel zur Justage gedacht. Ebenso können in einer weiterführenden Verwendung entsprechend den Anforderungen zusätzlich weitere optische Bauteile und/oder Mittel zur Strahlablenkung eingefügt werden.

Nach einem bevorzugten Ausführungsbeispiel wird der zweite Puls über Mittel zur Strahlablenkung in einen Zielbereich gelenkt, wobei vorgesehen ist, dass der Puls eine zu dem ersten Puls verschiedene Strecke zurücklegt, insbesondere eine längere Verzögerungsstrecke. Mit Verzögerungsstrecke ist dabei insbesondere eine zu dem ersten Puls im Vergleich längere Strecke gemeint. Die Mittel zur Strahlablenkung sind dabei beliebig. Vorzugsweise kommen wiederum Spiegel bzw. Glasfasern zur Anwendung. Die Länge der Verzögerungsstrecke ist beispielhaft mit einer festen Länge ausgeführt, die aber zur Justage auch zur fortwährenden Pulserzeugung verändert werden kann. Zur genauen Berechnung der zeitlichen Verzögerung bzw. zu deren Einstellung kann es notwendig sein, dass der erste und der zweite Puls eine verschiedene Strecke zurücklegen.

Darüber hinaus ist es besonders bevorzugt, dass die Verzögerungsstrecke, die der zweite Puls zurücklegt, eine konstante Länge hat, die von Null verschieden ist, um die zeitliche Verzögerung des ersten und des zweiten Pulses im jeweiligen Zielbereich im Wesentlichen konstant zu halten. Daraus ergibt sich, dass die zeitliche Verzögerung prinzipiell über die Repetitionsrate variabel einstellbar ist. Die Verzögerungsstrecke, die der zweite Puls zurücklegt, kann ebenso, insbesondere in der Terahertz-Spektroskopie, durch eine im Vergleich zu der Glasfaser, die den ersten Puls leitet, längere Glasfaser realisiert werden.

Nach einer besonders bevorzugten Ausgestaltung ist die Verzögerungsstrecke als Anordnung zur Kompensation der Pulsaufweitung, durch Dispersion in einer Glasfaser oder aber auch in Luft, ausgebildet. Dabei ist es möglich, auch weitere optische Elemente in der Verzögerungsstrecke vorzusehen, die den Puls nicht nur in seiner Form und Dauer verändern können.

Um die zeitliche Verzögerung der beiden Pulse im jeweiligen Zielbereich über die Repetitionsrate des gepulsten Signals einzustellen, ist es besonders bevorzugt vorgesehen, die Länge der Verzögerungsstrecke konstant zu halten und nur zur Justage anzupassen. Damit ergibt sich eine wesentliche Verbesserung diesbezüglicher Aufbauten, da die zeitliche Verzögerung nicht über die Veränderung der Länge der Verzögerungsstrecke vorgenommen wird und somit auch die Veränderung der Verzögerungsstrecke nicht zu Fehlern führt.

Gemäß einer weiteren Ausgestaltung der Erfindung kann vorgesehen sein, dass sich die zeitliche Verzögerung der beiden Pulse im jeweiligen Ziel aus der Länge der Verzögerungsstrecke, der Ausbreitungsgeschwindigkeit der Pulse, der Pulswiederholungsrate und einem Faktor für die Anzahl der Pulse der Laserquelle, die zwischen den den ersten und den zweiten Puls erzeugenden Pulsen liegen, ergibt. Dabei berücksichtigt die Länge der Verzögerungsstrecke die Länge vom Strahlteiler zum ersten Auftreffpunkt, die Länge vom Strahlteiler zu einem eventuell vorhandenen Mittel zur Strahlablenkung sowie die Länge von einem eventuell vorhandenen Mittel zur Strahlablenkung zu einem zweiten Auftreffpunkt.

Gemäß einer einfachsten Realisierung des Aufbaus mit jeweils einem Lichtleiter für den ersten und den zweiten Teilstrahl bzw. Puls, kann nur der Längenunterschied der beiden Lichtleiter als Verzögerungsstrecke angesehen werden. Bei dieser Ausführungsform ist mit der Ausbreitungsgeschwindigkeit das Verhältnis von der Brechzahl und der Vakuumlichtgeschwindigkeit für das Material zu berücksichtigen, durch dass die beiden Signale geführt werden, wobei sich keine Einschränkung dahingehend ergeben soll, dass auch unterschiedliche Lichtleiter zur Führung des ersten und des zweiten Pulses verwendet werden. Der Faktor für die Anzahl der Pulse der Laserquelle, die zwischen dem den ersten und dem den zweiten Puls erzeugenden Pulsen liegen, ergibt sich im einfachsten Fall aus einer aufzählenden Nummerierung der Pulse, die die gepulste Strahlenquelle verlassen.

Weiter kann es vorgesehen sein, die Repetitionsrate über Fotosensoren zu bestimmen und bei bekannter Länge der Verzögerungsstrecke zur Bestimmung der zeitlichen Verzögerung zu verwenden. Zwar kann die Repetitionsrate auch über die Länge des Resonators im Laser bestimmt werden, es kann jedoch günstiger sein, das Signal auszukoppeln und die Repetitionsrate mittels eines Fotosensors zu bestimmen. Dies kann über beliebige optische Elemente erfolgen, die dazu dienen, einem Lichtsignal ein elektrisches Signal zuzuordnen, wobei sich die Messung von Intensitäten beispielhaft dann auf eine Messung von Spannungen reduziert.

Nach einer weiteren bevorzugten Ausführungsform des erfindungsgemäßen Verfahrens kann vorgesehen sein, über die Variation der Pulswiederholungsrate eine Variation der zeitlichen Verzögerung des ersten und zweiten Pulses im jeweiligen Zielbereich zu erreichen. Damit können zum Beispiel Relaxationsvorgänge zeitlich aufgelöst werden, um so auf zeitabhängige Vorgänge innerhalb des untersuchten Gegenstands zu schließen. Weiterhin kann es zudem vorgesehen sein, mit fest eingestellter Repetitionsrate bei einem konstanten zeitlichen Abstand der beiden Pulse eine entsprechende Untersuchung wiederholt unter gleichen Bedingungen durchzuführen, da damit ein bestimmtes Ergebnis genauer ermittelt werden kann. Die abschließende Verwendung der beiden Pulse im jeweiligen Zielbereich ist besonders bevorzugt zur Erzeugung und/oder Detektion eines elektromagnetischen Pulses vorgesehen. Dies ist auf eine Verwendung in der Terahertz-Physik zurückzuführen, wobei eine Dipolantenne einem Laserpuls ausgesetzt wird und die erzeugten freien Ladungsträger in einem elektrischen Feld beschleunigt werden und so einen Terahertz-Puls erzeugen. Die Anwendung der zeitlich verzögerten Pulse ist prinzipiell sehr vielseitig und kann insbesondere zur Vermessung von Vorgängen auf sehr kleinen Zeitskalen eingesetzt werden. Dabei ist es nunmehr möglich, über die Einstellung der zeitlichen Verzögerung in einem großen Bereich eine kontinuierliche Messung von verschiedenen in einer zeitlichen Abfolge stehenden Zuständen eines Systems durchzuführen.

Im Folgenden wird das erfindungsgemäße Verfahren anhand lediglich bevorzugte Ausführungsformen darstellender Figuren näher erläutert.

Es zeigt:

Fig. 1    schematische Darstellung für ein System zur Anwendung des Verfahrens, wobei die beiden Pulse leicht zeitversetzt im jeweiligen Zielbereich auftreffen;

Fig. 2    schematische Darstellung für ein System zur Verwendung eines vorgeschlagenen Verfahrens zur Erzeugung zweier Pulse mit kleinerer Repetitionsrate als in Fig. 1, wobei die Pulse stark zeitversetzt im jeweiligen Zielbereich auftreffen;

Fig. 3    schematische Darstellung für ein fasergekoppeltes System;

Fig. 4    schematische Darstellung für ein System zur Erzeugung von Terahertz-Pulsen, mit einer Vorrichtung zur Pulskompensation.

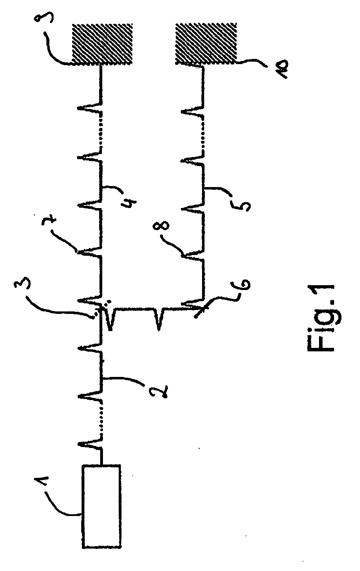

Fig. 1 zeigt eine Anordnung zur Durchführung des erfindungsgemäßen Verfahrens mit einer Laserlichtquelle 1, die einen gepulsten Strahl 2 erzeugt, der auf einen Strahlteiler 3 trifft und in einen ersten Teilstrahl 4 und einen zweiten Teilstrahl 5 aufgeteilt wird. Der zweite Teilstrahl wird über Mittel zur Strahlablenkung 6 umgelenkt. Der erste Teilstrahl 4 enthält einen ersten Puls 7, der auf einen ersten Zielbereich 9 gelenkt wird. Der zweite Teilstrahl 5 enthält einen zweiten Puls 8, der auf einen zweiten Zielbereich 10 gelenkt wird. Der zweite Teilstrahl 5 legt eine Verzögerungsstrecke zurück, die zwischen dem Strahlteiler 3 und dem Mittel zur Strahlablenkung 6 liegt. Ein vom Laser 1 mit einer bestimmten Repetitionsrate erzeugter Puls wird von einem Strahlteiler 3, der hier als halbdurchlässiger Spiegel ausgeführt sein kann, in einen ersten Puls 7, der in einem ersten Teilstrahl 4 liegt, und in einen zweiten Puls 8, der in einem zweiten Teilstrahl 5 liegt, aufgeteilt. Dabei ist die Verzögerungsstrecke in Abhängigkeit der Repetitionsrate so gewählt, dass die Pulse aus dem ersten Teilstrahl 4 und aus dem zweiten Teilstrahl 5 jeweils leicht zeitversetzt im jeweiligen Ziel 9, 10 auftreffen. Dazu ist die Verzögerungsstrecke in ihrer Länge frei wählbar und entspricht hier beispielsweise etwa dem zweifachen Pulsabstand der den gepulsten Laser verlassenden Pulse. Der Abstand der beiden Pulse, die aus einem Puls des gepulsten Laserstrahls entstammen und auf gleicher Höhe liegen, beträgt etwa zwei Pulse. Auf diese Weise trifft ungefähr zeitgleich ein erster Puls 7 in ein erstes Ziel 9, wenn ein zweiter Puls 8 in ein zweites Ziel 10 trifft, wobei dieser zweite Puls 8 dem Puls der Laserquelle entstammt, der zwei Pulse vor dem Puls liegt, der den ersten Puls erzeugt. In diesem Fall treffen zwei Pulse jeweils nahezu synchron in einen jeweiligen Zielbereich und können beispielsweise eine Dipolantenne anregen, um synchron einen elektromagnetischen Puls, wie beispielsweise einen Terahertz-Puls, zu erzeugen.

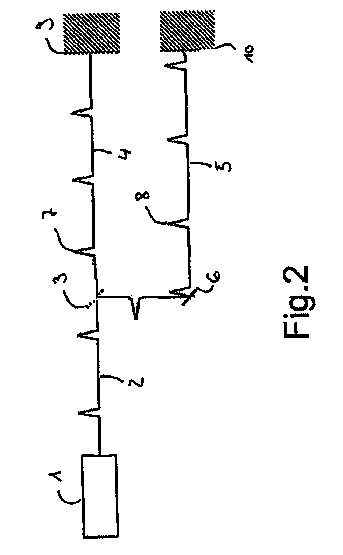

Fig. 2 zeigt ebenfalls eine Anordnung zur Durchführung eines erfindungsgemäßen Verfahrens mit einem Laser 1, aus dem ein gepulster Strahl 2 auf einen Strahlteiler 3 trifft und in einen ersten Teilstrahl 4 und einen zweiten Teilstrahl 5 aufgeteilt wird. Der erste Teilstrahl 4 enthält einen ersten Puls 7, der in ein erstes Ziel 9 gelenkt wird. Der zweite Teilstrahl 5 legt eine Verzögerungsstrecke zurück, die zwischen dem Strahlteiler 3 und einem Mittel zur Strahlablenkung 6 liegt. Der zweite Puls 8 aus dem zweiten Teilstrahl 5 wird nach dem Zurücklegen einer Verzögerungsstrecke in ein zweites Ziel 10 gelenkt. Die vorliegende Abbildung ist mit einer kleineren Repetitionsrate dargestellt, um eine Situation zu verdeutlichen, in der die Pulse nicht synchron in ihren jeweiligen Auftreffpunkt treffen. Dabei ist die Wahl der Länge der Verzögerungsstrecke grundsätzlich frei und bestimmt die Lage der Pulse bei einer bestimmten Repetitionsrate. Es ist außerdem dabei wichtig, dass die Länge der Verzögerungsstrecke fest ist und grundsätzlich unabhängig von dem angewendeten Verfahren. Indiziert man die Pulse, so kann man beispielhaft einen ersten Puls und einen zweiten Puls mit $I$ identifizieren, da die beiden Pulse dem $I$-ten Puls, der aus der Strahlungsquelle stammt, zuzuordnen sind. Die Anzahl der Pulse pro Weglänge ist in beiden Teilstrahlen gleich und mit der Repetitionsrate vorgegeben. Eine Änderung der Repetitionsrate ergibt eine gleichmäßige Verschiebung der Pulse im ersten und zweiten Teilstrahl relativ zueinander. Die Gesamtverschiebung der Pulse ist proportional zur Anzahl der Pulse im jeweiligen Teilstrahl und ergibt sich aus der Summe der einzelnen Verschiebungen der Pulse zueinander. Da die Länge der beiden Teilstrahlen vom Strahlteiler zum jeweiligen Auftreffpunkt verschieden ist, ergibt sich eine unterschiedliche Verschiebung der Pulse im Zielbereich abhängig von der Anzahl der Pulse, die der jeweilige Teilstrahl enthält. Entsprechend fällt die Gesamtverschiebung im kürzeren Teilstrahl kleiner aus, da dieser weniger Pulse enthält. Im Umkehrschluss ergibt sich für den längeren Teilstrahl mit einer größeren Anzahl von Pulsen eine größere Verschiebung.

Im Folgenden wird die Berechnung der Pulsverzögerung durch Änderung der Repetitionsrate erläutert.

Der zeitliche Abstand $\tau$ zweier aufeinander folgender Pulse des Lasers mit der Repetitionsrate $R$ entspricht $\tau_0 = 1/R$

Allgemein kann der zeitliche Abstand $\tau$ eines Pulses $I(i) = i$ zum Puls $I(i + a) = i + a$ mit dem Pulsabstand $\Delta I = I(i + a) - I(i) = a$ wie folgt beschrieben werden.

$$\tau = \Delta I \cdot \tau_0 = \Delta I / R$$

Die Laufzeit $t$ einer elektromagnetischen Welle durch ein Medium mit dem Brechungsindex n und einer durchlaufenden Strecke $l$ mit der Vakuumlichtgeschwindigkeit $c_0$ beträgt

$$t = l \cdot n/c_0.$$

Betrachtet man den zeitlichen Unterschied $\Delta t$ des Auftreffzeitpunkts eines Pulses $I(i)$ in beiden Teilstrahlen, setzt sich dieser aus der benötigten Zeit zum Zurücklegen der Strecken Strahlteiler-Auftreffpunkt 1 mit $t_1$, Strahlteiler-Mittel zum Umlenken des Strahls mit $t_v$ und Mittel zum Umlenken des Strahls-Auftreffpunkt 2 mit $t_2$ zusammen und ergibt sich zu

$$\Delta t = t_2 + t_v - t_1,$$

wobei dies mit $t_1 = konstant$ und $t_2 = konstant$ und $t_v = variabel$ der herkömmlichen Verzögerungsstrecke entspricht.

Damit beträgt der Abstand zwischen dem Auftreffzeitpunkt eines Pulses $I(i) = i$ im ersten Teilstrahl und eines Pulses $I(i + a) = i + a$ im zweiten Teilstrahl mit $\Delta I = a$

$$\Delta \tau = t_2 + t_v - t_1 - \tau.$$

Somit ergibt sich für den zeitlichen Abstand

$$\Delta \tau = l_2 \cdot n_2/c_0 + l_v \cdot n_v/c_0 + l_1 \cdot n_1/c_0 - \Delta I/R.$$

Damit kann unter Berücksichtigung aller Wegstrecken und Brechungsindizes bei Betrachtung zweier unterschiedlicher Pulse die Pulsverzögerung durch Änderung der Repetitionsrate variiert werden.

Zudem kann der Variationsbereich der Pulsverzögerung aus der Repetitionsrate zwischen $R_{min}$ und $R_{max}$ variiert werden. Es ergibt sich

$$\Delta \tau_{var} = \Delta I \cdot (1/R_{min} - 1/R_{max})$$

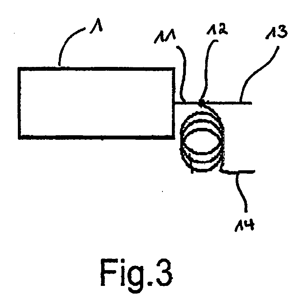

Fig. 3 zeigt beispielhaft ein geschlossenes System unter Verwendung von Lichtleitern bzw. Glasfaserkabeln, um ein erfindungsgemäßes Verfahren durchzuführen, wobei ein Laser 1 an einen ersten Lichtleiter 11 gekoppelt ist, welcher auf einen Faserkoppler 12 trifft und in zwei weitere Lichtleiter 13, 14 aufgeteilt wird. Der zweite Lichtleiter 13 trifft direkt in ein Ziel, während der dritte Lichtleiter 14 nach dem Zurücklegen einer Verzögerungsstrecke bzw. einem längeren Lichtweg in dem beispielhaften Glasfaserkabel in ein zweites Ziel gelangt. Hierbei ist deutlich zu erkennen, wie in einem derartigen fasergestützten Aufbau eine feste Verzögerungsstrecke realisiert ist. Ein Vorteil einer Vorrichtung nach diesem Beispiel kann in einer möglichen transportfähigen Ausführung liegen oder auch in einem leichten Zusammenbau einer derartigen Vorrichtung, um ein erfindungsgemäßes Verfahren zu realisieren.

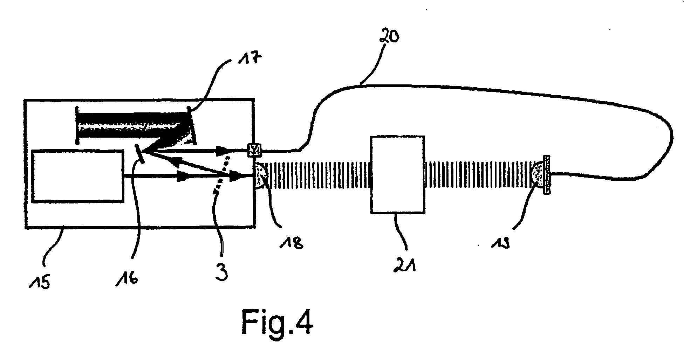

Fig. 4 zeigt schematisch einen Aufbau zur Erzeugung von Terahertz-Pulsen mit einem Gehäuse 15, einem Laser 1, der einen gepulsten Strahl auf einen Strahlteiler 3 sendet, wobei ein erster Teilstrahl auf eine erste Dipolantenne 18 gelenkt wird und ein zweiter Teilstrahl auf einen Spiegel 16 gelenkt wird, der diesen Teilstrahl einer Anordnung zur Pulskompensation 17 zuführt und den zweiten Teilstrahl in eine Glasfaser 20 einkoppelt, die diesen in eine zweite Dipolantenne 19 lenkt. Dabei erzeugt die erste Dipolantenne 18 einen Terahertz-Puls, mit dem ein zu untersuchender Gegenstand 21 bestrahlt wird. In der zweiten Dipolantenne 19 wird der transmittierte Terahertz-Puls durch Variierung der Pulsverzögerung durch den Laserpuls schrittweise abgetastet. Die Probe 21 in der Mitte kann dabei mit Terahertz-Pulsen aus der Dipolantenne 18 untersucht werden, die eine bestimmte zeitliche Verzögerung bis zur Detektion an der Dipolantenne 19 aufweisen, wobei diese bestimmte zeitliche Verzögerung durch die Repetitionsrate des Lasers 1 eingestellt werden kann.

## Bezugszeichenliste

| | |
|---|---|
| 01 | Laser |
| 02 | Gepulster Strahl |
| 03 | Strahlteiler |
| 04 | Erster Teilstrahl |
| 05 | Zweiter Teilstrahl |
| 06 | Mittel zur Strahlablenkung |
| 07 | Erster Puls |
| 08 | Zweiter Puls |
| 09 | Erster Zielbereich |
| 10 | Zweiter Zielbereich |
| 11 | Erster Lichtleiter |
| 12 | Faserkoppler |
| 13 | Zweiter Lichtleiter |
| 14 | Dritter Lichtleiter |
| 15 | Gehäuse |
| 16 | Spiegel |
| 17 | Mittel zur Pulskompensation |
| 18 | Erste Dipolantenne |
| 19 | Zweite Dipolantenne |
| 20 | Glasfaser |
| 21 | Probe |

## Patentansprüche

1.  Verfahren zur Erzeugung zweier verzögerter Pulse, insbesondere in der Terahertz-Spektroskopie oder bei Pump-Probe-Versuchen, mit folgenden Verfahrensschritten:

    - Erzeugen eines gepulsten Strahls unter Verwendung einer als gepulste Laserquelle ausgebildeten Strahlenquelle;
    - Teilen des gepulsten Strahls, wobei ein erster Teilstrahl einen ersten Puls und ein zweiter Teilstrahl einen zweiten Puls enthält;
    - Lenken der beiden Pulse auf einen jeweiligen Zielbereich,

        -- wobei der erste Puls direkt in einen ersten Zielbereich gelangt und der zweite Puls nach dem Zurücklegen einer Verzögerungsstrecke in einen zweiten Zielbereich gelangt,

-- wobei der zweite Puls über Mittel zur Strahlablenkung in den zweiten Zielbereich gelenkt wird und dabei die zu dem ersten Puls längere Verzögerungsstrecke zurücklegt,

-- wobei die Verzögerungsstrecke eine konstante und von Null verschiedene Länge hat, und

-- die zeitliche Verzögerung der beiden Pulse im jeweiligen Zielbereich über die Pulswiederholungsrate des gepulsten Strahls eingestellt wird;

- Verwendung der beiden Pulse für ein Messverfahren;

**dadurch gekennzeichnet,**
**dass** die Mittel zur Strahlablenkung als Lichtleiter ausgeführt sind und dass die Verzögerungsstrecke eine Anordnung zur Kompensation der Pulsaufweitung und einen Lichtleiter aufweist.

2. Verfahren nach Anspruch 1, **dadurch gekennzeichnet, dass** der gepulste Strahl auf einen als Faserkoppler ausgebildeten Strahlteiler trifft und in den ersten Teilstrahl mit dem ersten Puls und den zweiten Teilstrahl mit dem zweiten Puls aufgeteilt wird.

3. Verfahren nach Anspruch 2, **dadurch gekennzeichnet, dass** der erste Puls und der zweite Puls aus demselben Puls der Strahlenquelle stammen.

4. Verfahren nach Anspruch 2, **dadurch gekennzeichnet, dass** der erste Puls und der zweite Puls aus verschiedenen Pulsen der Strahlenquelle stammen.

5. Verfahren nach einem der Ansprüche 1 bis 4, **dadurch gekennzeichnet, dass** der erste Puls über Mittel zur Strahlablenkung in den ersten Zielbereich gelenkt wird und die Mittel zur Strahlablenkung als Lichtleiter ausgebildet sind.

6. Verfahren nach einem der Ansprüche 1 bis 5, **dadurch gekennzeichnet, dass** die konstante Länge der Verzögerungsstrecke dem Experiment oder zur Justage angepasst wird.

7. Verfahren nach einem der Ansprüche 1 bis 6, **dadurch gekennzeichnet, dass** sich die zeitliche Verzögerung der beiden Pulse im Zielbereich aus der Länge der Verzögerungsstrecke, der Ausbreitungsgeschwindigkeit der Pulse, der Pulswiederholungsrate und einem Faktor für die Anzahl der Pulse der Laserquelle, die zwischen den den ersten und den zweiten Puls erzeugenden Pulsen liegen, ergibt.

8. Verfahren nach einem der Ansprüche 1 bis 7, **dadurch gekennzeichnet, dass** die Repetitionsrate über Fotosensoren bestimmt wird und bei bekannter Länge der Verzögerungsstrecke zur Bestimmung der zeitlichen Verzögerung verwendet wird.

9. Verfahren nach einem der Ansprüche 1 bis 8, **dadurch gekennzeichnet, dass** eine Variation der Pulswiederholungsrate der Variation der zeitlichen Verzögerung des ersten und zweiten Pulses entspricht.

10. Verfahren nach einem der Ansprüche 1 bis 9, **dadurch gekennzeichnet, dass** die Pulse im Zielbereich zur Erzeugung oder Detektion eines elektromagnetischen Pulses verwendet werden.

11. Verfahren nach einem der Ansprüche 1 bis 10, **dadurch gekennzeichnet, dass** die beiden Zielbereiche zusammenfallen.

**Claims**

1. Method for generating two delayed pulses, in particular in terahertz spectroscopy or in pump-probe-experiments, the method comprising the following method steps:

- generating a pulsed beam using a beam source configured as a pulsed laser source;
- dividing the pulsed beam, wherein a first partial beam contains a first pulse and a second partial beam contains a second pulse;
- directing both pulses onto a respective target area,

-- wherein the first pulse directly reaches a first target area and the second pulse reaches a second target area after covering a delay path,
-- wherein the second pulse is directed into the second target area via means for beam deflection and thereby covers the delay path, which is longer than that for the first path,
-- wherein the delay path has a constant non-zero length, and
-- the temporal delay of both pulses in the respective target area is controlled via the pulse repetition rate;

- using both pulses for a measuring method,

**characterized in that**
the means for beam deflection are configured as wave guides, and the delay path comprises an assembly for compensating pulse widening as well as a wave guide.

2.  Method according to claim 1, **characterized in that** the pulse beam impinges on a beam splitter configured as a fiber coupler and is divided into the first partial beam with the first pulse and the second partial beam with the second pulse.

3.  Method according to claim 2, **characterized in that** the first pulse and the second pulse originate from the same pulse from the beam source.

4.  Method according to claim 2, **characterized in that** the first pulse and the second pulse originate from different pulses of the beam source.

5.  Method according to any of claims 1 to 4, **characterized in that** the first pulse is directed into the first target area via means for beam deflection, and the means for beam deflection are configured as wave guides.

6.  Method according to any of claims 1 to 5, **characterized in that** the constant length of the delay path is adapted to the experiment or for the purpose of adjustment.

7.  Method according to any of claims 1 to 6, **characterized in that** the time delay of the two pulses in the target area is determined by the length of the delay path, a speed of propagation of the pulses, the pulse repetition rate and a factor for the number of pulses of the laser source, which lie between the pulses generating the first and the second partial pulse.

8.  Method according to any of claims 1 to 7, **characterized in that** the repetition rate is determined via photo sensors and is used with known length of the delay path for determining the time delay.

9.  Method according to any of claims 1 to 8, **characterized in that** a variation of the pulse repetition rate corresponds to the variation of a time delay of the first and second partial pulses.

10. Method according to any of claims 1 to 9, **characterized in that** the pulses are used in the target area for generating or detecting an electromagnetic pulse.

11. Method according to any of claims 1 to 10, **characterized in that** the two target areas coincide.


**Revendications**

1.  Procédé pour produire deux impulsions décalées dans le temps, notamment dans la spectroscopie Térahertz ou dans le cadre d'essais avec la technique pompe-sonde, comprenant les étapes de procédé suivantes :

    - production d'un faisceau pulsé par l'utilisation d'une source de rayonnement réalisée sous forme de source laser pulsée ;
    - division du faisceau pulsé, un premier faisceau partiel renfermant une première impulsion et un deuxième faisceau partiel une deuxième impulsion ;
    - déviation des deux impulsions sur une zone-cible respective,

        -- d'après laquelle la première impulsion parvient directement dans une première zone-cible, et la deuxième impulsion parvient dans une deuxième zone-cible après avoir parcouru un parcours de retardement,
-- d'après laquelle la deuxième impulsion est déviée vers la deuxième zone-cible par l'intermédiaire de moyens de déviation de faisceau, en couvrant à cette occasion le parcours de retardement plus long par rapport à celui de la première impulsion,
-- d'après laquelle le parcours de retardement possède une longueur constante et différente de zéro, et
-- le décalage dans le temps des deux impulsions dans la zone-cible respective étant réglé par le taux de répétition d'impulsion du faisceau pulsé ;

- utilisation des deux impulsions pour un procédé de mesure ;

**caractérisé**
**en ce que** les moyens de déviation de faisceau sont réalisés sous forme de guide d'onde lumineuse ou fibre optique, et en ce que le parcours de retardement présente un agencement pour la compensation de l'élargissement d'impulsion et un guide d'onde lumineuse ou fibre optique.

2. Procédé selon la revendication 1, **caractérisé en ce que** le faisceau pulsé arrive sur un diviseur de faisceau réalisé sous forme de coupleur optique ou coupleur de fibres, et est divisé en le premier faisceau partiel avec la première impulsion et en le deuxième faisceau partiel avec la deuxième impulsion.

3. Procédé selon la revendication 2, **caractérisé en ce que** la première impulsion et la deuxième impulsion sont issues de la même impulsion de la source de rayonnement.

4. Procédé selon la revendication 2, **caractérisé en ce que** la première impulsion et la deuxième impulsion sont issues d'impulsions différentes de la source de rayonnement.

5. Procédé selon l'une des revendications 1 à 4, **caractérisé en ce que** la première impulsion est déviée sur la première zone-cible par l'intermédiaire de moyens de déviation de faisceau, et les moyens de déviation de faisceau sont réalisés sous forme de guide d'onde lumineuse ou fibre optique.

6. Procédé selon l'une des revendications 1 à 5, **caractérisé en ce que** l'on adapte la longueur constante du parcours de retardement à l'expérimentation ou pour l'ajustage.

7. Procédé selon l'une des revendications 1 à 6, **caractérisé en ce que** le décalage dans le temps des deux impulsions dans la zone-cible résulte de la longueur du parcours de retardement, de la vitesse de propagation des impulsions, du taux de répétition des impulsions et d'un facteur pour le nombre des impulsions de la source laser, qui se situent entre les impulsions produisant la première et la deuxième impulsion.

8. Procédé selon l'une des revendications 1 à 7, **caractérisé en ce que** le taux de répétition est déterminé par l'intermédiaire de photo-détecteurs, et, dans le cas d'une longueur connue du parcours de retardement, est utilisé pour la détermination du décalage dans le temps.

9. Procédé selon l'une des revendications 1 à 8, **caractérisé en ce que** le taux de répétition des impulsions correspond à la variation du décalage dans le temps de la première et de la deuxième impulsion.

10. Procédé selon l'une des revendications 1 à 9, **caractérisé en ce que** les impulsions dans la zone-cible sont utilisées pour la production ou la détection d'une impulsion électromagnétique.

11. Procédé selon l'une des revendications 1 à 10, **caractérisé en ce que** les deux zones-cible coïncident.

Fig.1

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005011045 A1
- US 2005073689 A1
- WO 2007079342 A2
- US 6320191 B